# EUROPEAN PATENT SPECIFICATION

(11) **EP 0 875 729 B1**
(45) Date of publication and mention of the grant of the patent: **06.07.2005**
(21) Application number: 98107594.8
(22) Date of filing: 27.04.1998
(51) Int. Cl.: G01C 21/20, G09B 29/10, G08G 1/0969

(54) **Map display controlling method and apparatus**
Verfahren und Vorrichtung zum Steuern einer Kartenanzeige
Méthode et dispositif pour contrôler l'affichage d'une carte

(30) Priority: 28.04.1997 JP 11150197
(43) Date of publication of application: 04.11.1998
(73) Proprietor: PIONEER ELECTRONIC CORPORATION, Meguro-ku Tokyo-to (JP)
(72) Inventor: Yamanaka, Kiyoshi, c/o Pioneer Electronic Corp., Kawagoe-shi, Saitama-ken (JP); Yano, Kenichiro, c/o Pioneer Electronic Corp., Kawagoe-shi, Saitama-ken (JP)
(74) Representative: Klingseisen, Franz, Dipl.-Ing.

(56) References cited:
- EP-A- 0 720 003
- EP-A- 0 747 670
- US-A- 5 289 572

## Description

### BACKGROUND OF THE INVENTION

### 1. Field of the Invention

The present invention relates to a navigation apparatus. More particularly, the present invention relates to a map display controlling method and a map display controlling apparatus in the navigation apparatus having a function for displaying, together with map information, mark information (so-called "iconic picture information"), which are respectively situated at points on a map corresponding to specific facilities, such as restaurants, gasoline stations, service areas and the like, and respectively indicate the existence of serviceable information, such as name information, operation information and menu information of the restaurants and the like, with regard to the specific facilities respectively.

### 2. Description of the Related Art

There is a so-called navigation apparatus, which displays a map including a position where a movable body in various kinds, such as a car, an airplane, a ship or the like, is currently located, on a screen of a CRT (Cathode Ray Tube) display, an LCD (Liquid Crystal Display) display or the like, and further superimposes a present position mark of indicating the position of the movable body on the map to thereby display it on the screen, and accordingly performs a route guidance to a destination and the like.

There are roughly a self-supporting type navigation apparatus and a GPS (Global Positioning System) type navigation apparatus as vehicle navigation apparatuses mounted in a vehicle. The former determines a travel direction and a travel distance of the movable body by using a speed sensor, an angular velocity sensor, an azimuth sensor and the like installed in the movable body, and then accumulates them with respect to a standard point to thereby calculate a present position, and further displays a present position mark and a proper map including the present position on a display screen based on the calculated present position. The latter receives electric waves from a plurality of GPS satellites launched into outer space, and then calculates the present position of the movable body by using a three-dimensional survey or a two-dimensional survey based on the reception result, and further displays the present position mark and the proper map including the present position on the display screen based on the calculated present position. Moreover, there is a vehicle navigation apparatus, which has both of the functions of the self-supporting type and the GPS type.

The basic function of the navigation apparatus is to correlate and display the present position of the user (driver) itself i. e. the present position of the self-vehicle with a map near the present position so that the user can reach his destination without being misguided even in a territory to which he has never been. Moreover, there is such a navigation apparatus having an additional function of displaying, together with the map, a so-called "icon" or "pict" (hereafter, referred to as an "iconic picture"). Each of the iconic pictures is a mark having a special shape predetermined on the basis of a kind of a facility. Each of the iconic pictures is situated at a point on a map corresponding to the specific facility, such as, a restaurant, a gasoline stations, a service area and the like, and indicates the existence of serviceable information, such as, name information, operation information and menu information of the restaurant and the like, with regard to the specific facility. More actually, an iconic picture representing a restaurant (a restaurant mark) and an iconic picture representing a gasoline station (a gasoline station mark) are displayed on the displayed map indicating the vicinity of the present position of a self-vehicle and the like. When a cursor, such as a cross-shaped cursor or the like, is positioned on a desirable iconic picture among these iconic pictures by a joystick operation of the user and the like, and further a key operation to provide the information in relation to this iconic picture is carried out, the related information, such as the name information, the operation information and the menu information of the restaurant for example, with regard to this iconic picture is displayed on the display screen. Thus, according to such a function of the iconic picture display operation, if the user positions the cursor to the desirable iconic picture displayed on the map, he can obtain the detail information with regard to the facility corresponding to the iconic picture other than position information. Hence, this is very convenient.

In such a navigation apparatus, for example, the user is in the middle of driving a car in many cases. Thus, it is desirable to perform as easily as possible the operations of displaying the desirable map information and providing the above mentioned related information by specifying the iconic pictures.

However, according to the above mentioned function of the iconic picture display operation, within the displayed map on a small screen having a size of 6 inches or the like, a much smaller iconic picture (a mark having a special shape) is displayed, and then it is required for the user to specify the desirable iconic picture by using the cross-shaped cursor or the like, in the manner of an icon operation by a cursor movement in the field of a personal computer. Thus, such a selection operation for the iconic picture is very inconvenient for the user, such as a driver and the like within the self-vehicle, which receives an acceleration, an deceleration, a swing and the like, due to a travel and a vibration resulting from an engine and the like.

### SUMMARY OF THE INVENTION

The present invention is proposed in view of the above mentioned problems. It is therefore an object of the present invention to provide a map display controlling method and a map display controlling apparatus in a navigation apparatus, which can specify a desirable iconic picture by a cursor on a displayed map by an easy operation.

The above object of the present invention can be achieved by a map display controlling method of controlling a display of map information by a display device in a navigation apparatus for displaying the map information together with a plurality of mark informations, each of which is located at a specific point indicated by the map information and indicates an existence of related information in relation to the specific point respectively. The map display controlling method includes: a judging process of judging whether or not the mark information is located within a display range of the map information displayed by the display device each time a command, which instructs the display device to indicate the mark information on the map information by a cursor one by one in an order starting from the mark information located closer to a desired position to that located farther from the desired position within the display range, is inputted; and a cursor display controlling process of controlling the display device to display the cursor together with the map information and the mark information such that the cursor indicates the mark information on the map information, if it is judged by the judging process that the mark information is located within the display range, and to display the cursor together with the map information and the mark information such that the cursor indicates the mark information on the map information by reducing a contraction scale of the map information to be displayed so as to display the mark information within the display range, if it is judged by the judging process that the mark information is not located within the display range.

Each time the command, which instructs the display device to indicate the mark information by the cursor one by one in the order starting from the mark information located closer to the desired position within the display range, is inputted, it is judged whether or not the mark information is located within the display range of the map information by the judging process. Then, if it is judged that the mark information is located within the display range, the display device is controlled to display the cursor together with the map information and the mark information such that the cursor indicates the mark information on the map information, by the cursor display controlling process. Alternatively, if it is judged that the mark information is not located within the display range, the contraction scale of the map information to be displayed is reduced so as to display the mark information within the display range, by the cursor display controlling process, and thereby the display device is controlled to display the cursor together with the map information and the mark information such that the cursor indicates the mark information on the map information.

In this manner, as the command is inputted one by one, the cursor indicates the mark information one by one on the map information. Thus, it is possible to indicate a plurality of mark informations displayed on the map information one after another in the order from that closer to the desired position (e.g., the center of the display range, the present position or the like). Especially, in case that the mark information is not located within the display range, the contraction scale of the map information to be displayed is reduced, so that the mark information to be nextly indicated by the cursor can be displayed on the screen of the display device. Therefore, after the cursor indicates the mark information, which is located the closest to the outer edge of the screen of the display device among the mark informations, even if the command to indicate the next mark information, which is located outside of the screen, it is still possible to automatically display the next mark information, which is indicated by the cursor, on the scale-reduced map information. This is very convenient for the user.

In one aspect of the map display controlling method of the present invention, the method further includes: a list preparing process of listing up coordinate information of the mark information located within a predetermined range with respect to the desired position as a standard, in an order starting from the mark information located closer to the desired position. In the judging process, it is judged whether or not the mark information is located within the display range, on the basis of the listed up coordinate information. And that, in the cursor display controlling process, the contraction scale is reduced so that the mark information can be displayed, on the basis of the listed up coordinate information, if it is judged by the judging process that the mark information is not located within the display range.

According to this aspect, the coordinate information of the mark information located within the predetermined range is listed up, in the order starting from the mark information located closer to the desired position, by the list preparing process. Then, it is judged whether or not the mark information is located within the display range, on the basis of the listed up coordinate information, by the judging process. Then, if it is judged by the judging process that the mark information is not located within the display range, the contraction scale is reduced so that the mark information can be displayed, on the basis of the listed up coordinate information, by the cursor display controlling process.

In this manner, the judgment by the judgment process can be performed easily and speedily on the basis of the listed up coordinate information.

In another aspect of the map display controlling method of the present invention, in the judging process, it is further judged whether or not the mark information is located within a partial range having a predetermined size included in the display range, when judging whether or not the mark information is located within the display range. And that, in the cursor display controlling process, the contraction scale is increased so that the partial range be coincident with the display range, and to display the cursor together with the map information and the mark information such that the cursor indicates the mark information on the map information, if it is judged by the judging process that the mark information is located within the partial range.

According to this aspect, when judging whether or not the mark information is located within the display range, it is further judged whether or not the mark information is located within the partial range, by the judging process. Then, if it is judged that the mark information is located within the partial range, the contraction scale is increased so that the partial range be coincident with the display range, by the cursor display controlling process. Then, the cursor is displayed together with the map information and the mark information such that the cursor indicates the mark information on the map information, by the cursor display controlling process.

In this manner, by reducing or increasing the contraction scale in accordance with the judgment result, it is possible to automatically display the map information in the contraction scale suitable to display the mark information to be indicated by the cursor. This is very convenient for the user.

In another aspect of the map display controlling method of the present invention, the command is inputted once each time a predetermined kind of a key input operation is performed once by a key inputting device of the navigation apparatus.

According to this aspect, each time the predetermined kind of the key input operation is performed once by the key inputting device, the command is inputted once. Thus, it is possible to indicate the mark informations one after another by the cursor by means of a simple operation.

In another aspect of the map display controlling method of the present invention, the command is inputted once each time a predetermined kind of a voice input operation is performed once by a voice inputting device of the navigation apparatus.

According to this aspect, each time the predetermined kind of the voice input operation is performed once by the voice inputting device, the command is inputted once. Thus, it is possible to indicate the mark informations one after another by the cursor by means of a simple operation, i.e., just by uttering a voice without any key input operations.

In another aspect of the map display controlling method of the present invention, the desired position is set to a center of the display range. Thus, the mark information can be indicated by the cursor in the order starting from that closer to the center of the display range.

Alternatively, the method further includes a process of controlling the display device to display a present position mark representing a present position of a movable body to which the navigation apparatus is installed, and the desired position is set to a position of the present position mark. Thus, the mark information can be indicated by the cursor in the order starting from that closer to the present position mark.

The above object of the present invention can be also achieved by a map display controlling apparatus for controlling a display of map information by a display device in a navigation apparatus for displaying the map information together with a plurality of mark informations, each of which is located at a specific point indicated by the map information and indicates an existence of related information in relation to the specific point respectively. The map display controlling apparatus is provided with: a judging device for judging whether or not the mark information is located within a display range of the map information displayed by the display device each time a command, which instructs the display device to indicate the mark information on the map information by a cursor one by one in an order starting from the mark information located closer to a desired position to that located farther from the desired position within the display range, is inputted; and a cursor display controlling device for controlling the display device to display the cursor together with the map information and the mark information such that the cursor indicates the mark information on the map information, if it is judged by the judging device that the mark information is located within the display range, and to display the cursor together with the map information and the mark information such that the cursor indicates the mark information on the map information by reducing a contraction scale of the map information to be displayed so as to display the mark information within the display range, if it is judged by the judging device that the mark information is not located within the display range.

According to the map display controlling apparatus as described above, the aforementioned map display controlling method of the invention can be appropriately performed.

In one aspect of the map display controlling apparatus of the present invention, the apparatus is further provided with a list preparing device for listing up coordinate information of the mark information located within a predetermined range with respect to the desired position as a standard, in an order starting from the mark information located closer to the desired position. The judging device judges whether or not the mark information is located within the display range, on the basis of the listed up coordinate information. And that, the cursor display controlling device reduces the contraction scale so that the mark information can be displayed, on the basis of the listed up coordinate information, if it is judged by the judging device that the mark information is not located within the display range.

In another aspect of the map display controlling apparatus of the present invention, the judging device further judges whether or not the mark information is located within a partial range having a predetermined size included in the display range, when judging whether or not the mark information is located within the display range. And that, the cursor display controlling device increases the contraction scale so that the partial range be coincident with the display range, and to display the cursor together with the map information and the mark information such that the cursor indicates the mark information on the map information, if it is judged by the judging device that the mark information is located within the partial range.

In another aspect of the map display controlling apparatus of the present invention, the apparatus is further provided with a key inputting device, and the command is inputted once each time a predetermined kind of a key input operation is performed once by the key inputting device.

In another aspect of the map display controlling apparatus of the present invention, the apparatus is further provided with a voice inputting device, and the command is inputted once each time a predetermined kind of a voice input operation is performed once by the voice inputting device.

In another aspect of the map display controlling apparatus of the present invention, the desired position is set to a center of the display range.

Alternatively, the apparatus is further provided with a device for controlling the display device to display a present position mark representing a present position of a movable body to which the navigation apparatus is installed, and the desired position is set to a position of the present position mark.

### BRIEF DESCRIPTION OF THE DRAWINGS

FIG. 1 is a block diagram showing a configuration of a navigation apparatus as a first embodiment according to the present invention;
FIG. 2 is a flowchart showing an iconic picture display operation in the first embodiment;
FIG. 3 is a plan view showing one example of a display screen in the first embodiment;
FIG. 4 is a plan view showing another example of the display screen in the first embodiment;
FIG.5 is a plan view showing another example of the display screen in the first embodiment;
FIG. 6 is a flowchart showing an iconic picture display operation in a second embodiment according to the present invention: and
FIG. 7 is a block diagram showing a configuration of a navigation apparatus as a third embodiment according to the present invention.

### DETAILED DESCRIPTION OF THE PREFERRED EMBODIMENTS

Preferred embodiments of the present invention are explained with reference to the drawings. Incidentally, in the following respective embodiments, a case is explained in which the present invention is applied to a vehicle navigation apparatus in a car and the like.

### (1) First Embodiment

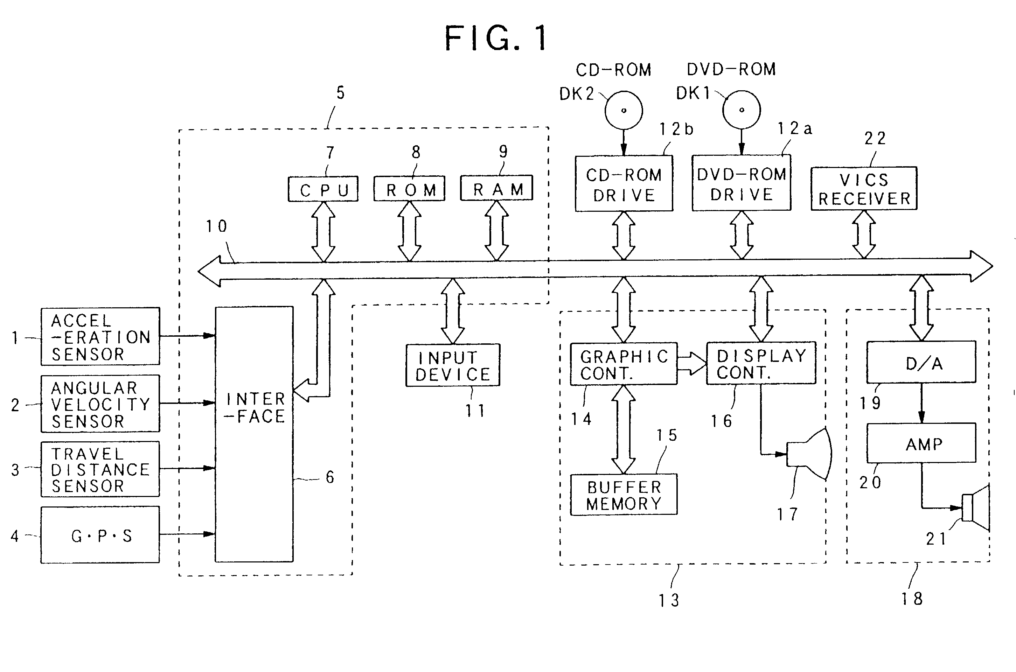

At first, a whole configuration of the vehicle navigation apparatus in the first embodiment is explained with reference to FIG. 1.

In FIG. 1, a vehicle navigation apparatus S is provided with: an acceleration sensor 1 for detecting an acceleration in a traveling or moving direction actually applied to a self-vehicle when the self-vehicle is started or stopped, or accelerated or decelerated to thereby output the acceleration data; an angular velocity sensor 2 for detecting an angular velocity when the self-vehicle is rotated to thereby output the angular velocity data and the relative azimuth data; a travel distance sensor 3 for detecting a vehicle speed pulse signal corresponding to a rotation of a wheel; and a GPS receiver 4 for receiving electric waves from GPS satellites to thereby output the GPS measurement data, such as a latitude, a longitude and the like, at which the self-vehicle is located, and further outputting the absolute azimuth data in the traveling direction of the self-vehicle. Now, as the acceleration sensor 1, various types, such as a capacitance type or a piezo type of a semiconductor acceleration sensor or a piezoelectric device type acceleration sensor and the like can be utilized.

Moreover, the vehicle navigation apparatus S is provided with: a system controller 5 for controlling the navigation apparatus S as a whole, on the basis of the acceleration data, the relative azimuth data, the angular velocity data, the travel distance data, the GPS measurement data and the absolute azimuth data which are outputted by the acceleration sensor 1, the angular velocity sensor 2, the travel distance sensor 3 and the GPS receiver 4, respectively; an input device 11, such as a key operation panel, a remote controller and the like, for inputting the various data; a DVD-ROM drive 12a and a CD-ROM drive 12b for respectively reading out and outputting the various data, such as the map data including road data indicative of the number of lanes, a road width and the like, the data indicative of detail information of the respective facilities and the like, from a DVD-ROM (DVD Read Only Memory) disk DK1 and a CD-ROM (Compact Disk Read Only Memory) disk DK2, under the control of the system controller 5; a display unit 13 for displaying the various display data under the control of the system controller 5; an acoustically reproducing unit 18 for reproducing and outputting various audio data under the control of the system controller 5; and a VICS (Vehicle Information and Communication System) receiver 22 for receiving traffic jam information based on the VICS whose practical use is promoted in recent years.

The related information other than position information of the specific facilities such as a restaurant, a gasoline station, a service area and the like, e.g., the name information, the operation information and the menu information of the restaurant, the name information and the operation information of the gasoline station, the provision service content information of the service area and so on, which are respectively disposed at points on a map corresponding to the specific facilities and which are related to the respective specific facilities, are stored in at least one of the DVD-ROM disk DK1 and the CD-ROM disk DK2, in addition to the map information to display the map. Moreover, the iconic picture display information for representing a position and a kind of each iconic picture to indicate the existence of the related information in relation to each specific facility by using each iconic picture is stored in the DVD-ROM disk DK1 and the CD-ROM disk DK2, in such a way that the iconic picture display information is correlated with the specific position (i.e., a position of each facility) in the map information.

Both of the DVD-ROM disk DK1 and the CD-ROM disk DK2 are used in this embodiment. However, if all of the map information, the iconic picture display information, the related information and the like necessary for the vehicle navigation apparatus S are stored in any one of the DVD-ROM disk DK1 and the CD-ROM disk DK2, there is no problem if there is only one of the DVD-ROM drive 12a or the CD-ROM drive 12b to read all of the information. It may be constructed so as to store one portion of the above mentioned information in one disk and then store the remaining information in the other disk. The DVD-ROM disk DK1 is typically superior in memory capacity. On the other hand, the installation of the CD-ROM disk drive 12b is advantageous in that it is possible to utilize the existing CD-ROM disk DK2 in which the map information is stored.

The system controller 5 is provided with: an interface 6 for performing an interface operation to external sensors such as the GPS receiver 4 and the like; a CPU (Central Processing Unit) 7 for counting the number of pulses in the vehicle speed pulse signal from the travel distance sensor 3 and thereby calculating a travel distance of the self-vehicle and further controlling the system controller 5 as a whole; a ROM (Read Only Memory) 8 for storing a control program to control the system controller 5 and the like; and a RAM (Random Access Memory) 9, which has a non-volatile memory (not shown) and writably stores various data such as route data, which is set through the input device 11 by the user in advance of traveling. The system controller 5 is connected through a bus line 10 to the input device 11, the DVD-ROM drive DK1, the CD-ROM drive DK2, the display unit 13, the acoustically reproducing unit 18 and the VICS receiver 22.

The display unit 13 is provided with: a graphic controller 14 for controlling the display unit 13 as a whole on the basis of the control data sent through the bus line 10 from the CPU 7; a buffer memory 15 composed of memories of a VRAM (Video RAM) and the like for tentatively storing image information which can be instantly displayed; a display controller 16 for display-controlling a display 17 on the basis of the image data outputted by the graphic controller 14; and the display 17, such as an LCD apparatus, a CRT display apparatus and the like.

The iconic picture is displayed as the iconic picture display information is read out from the DVD-ROM disk DK1 or the CD-ROM disk DK2 at a time of displaying the map and is superimposed on the screen of the display 17. By displaying the iconic pictures in this way, it is possible to display only the facilities in one specific kind or kinds (e.g., only the restaurants) specified by the operation input through the input device 11, in which the user is interested. Hence, this is advantageous from the viewpoint of the easy visibility within the limited screen of the display 17.

The acoustically reproducing unit 18 is provided with: a D/A (Digital to Analog) converter 19 for performing a D/A conversion of the audio digital data sent through the bus line 10 by the DVD-ROM drive 12a, the CD-ROM drive 12b or the RAM 9; an amplifier 20 for amplifying an audio analog signal outputted by the D/A converter 19; and a speaker 21 for converting the amplified audio analog signal into a voice or an acoustic sound, and outputting it to an external portion.

In this embodiment, especially, one example of a displaying device is constructed by the display unit 13, one example of a judging device, a cursor display control device and a list generating device is constructed by the system controller 5, one example of a record medium is constructed by the DVD-ROM disk DK1 and the CD-ROM disk DK2, and one example of a key input device is constructed by the input device 11.

A basic navigation operation for performing the map display in the vehicle navigation apparatus S is explained below.

At first, when the navigation apparatus S is actuated, the system controller 5 firstly reads out the information to access the map information indicative of various maps classified on the basis of a territory and a scale (a contraction scale), the information to access the related information in relation to a specific facility indicated at a specific position on the map, the above mentioned iconic picture display information, the information to show a present position mark and the like, from the DVD-ROM disk DK1 or the CD-ROM disk DK2, and stores them into the RAM 9.

Associated with the travel of the self-vehicle, the present position data is determined by using a self-supporting type present position calculating method based on the output data from the acceleration sensor 1, the angular velocity sensor 2 and the travel distance sensor 3. Then, it is corrected by using the present position data determined by the GPS type present position calculating method based on the output data from the GPS receiver 4. Incidentally, the present position data determined from the GPS type present position calculating method may be corrected by the present position data determined from the self-supporting type present position calculating method. Moreover, any one type of the present position calculating methods may be singly used without the correction performed by the other method.

Then, the map information corresponding to the present position indicated by the present position data determined as mentioned above is read out from the DVD-ROM disk DK1 or the CD-ROM disk DK2, and is outputted to the graphic controller 14. The map including the present position is displayed on the screen of the display 17. Then, the present position mark is superimposed and displayed on the displayed map, on the basis of the calculated present position data. At this time, a map matching process to the displayed map is applied to the calculated present position data, so that the present position mark is always displayed on a road, on the screen of the display 17. Then, the display position of the present position mark is relatively changed on the map, in conjunction with the actual change of the present position resulting from the travel of the self-vehicle. The map displayed on the display 17 is updated as the occasion demand so that the present position is always included in the displayed map.

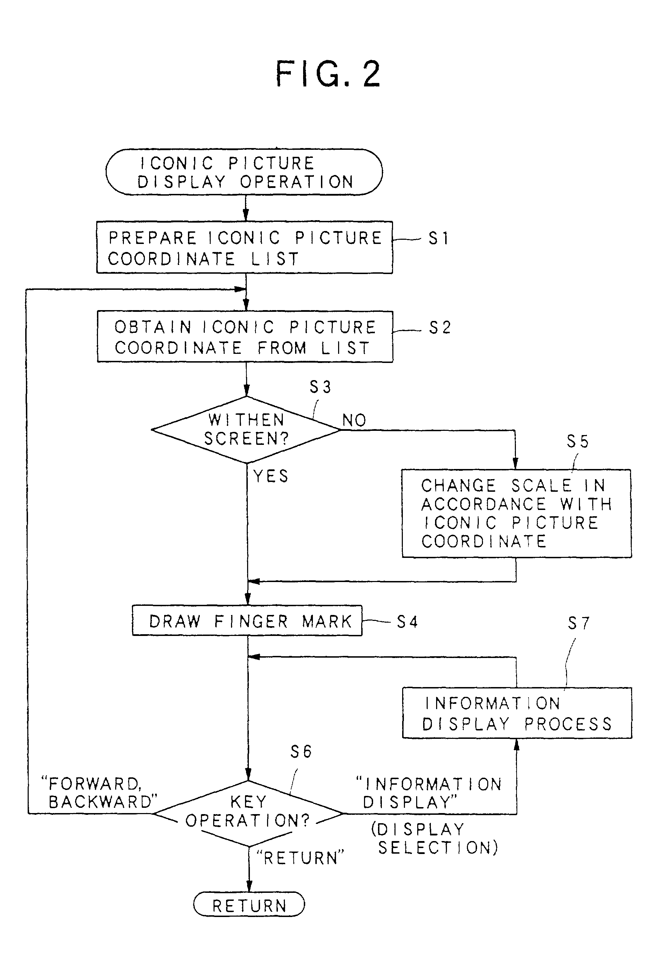

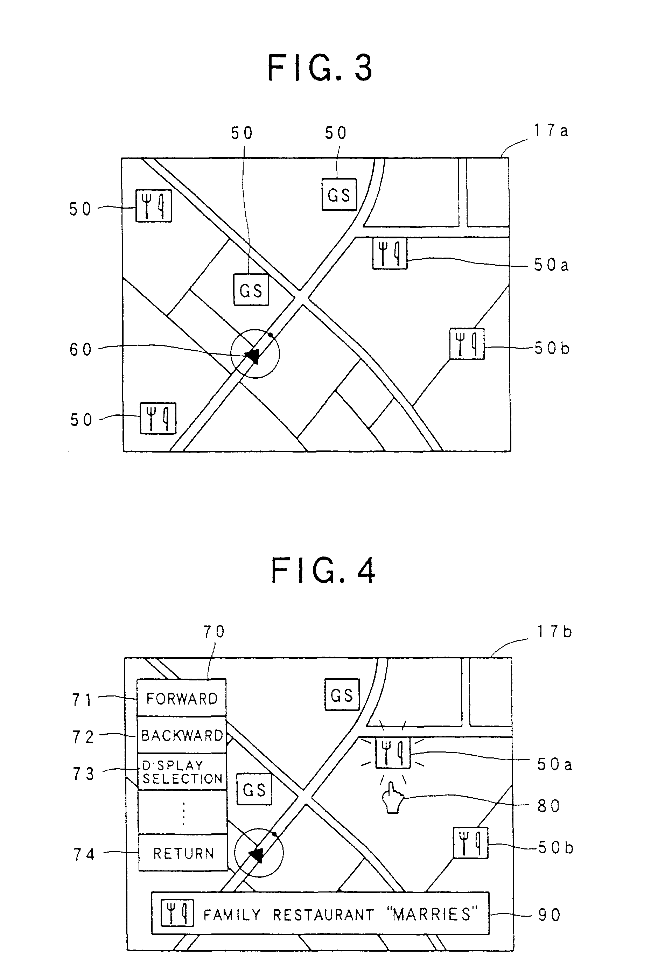

Operations according to the iconic picture display operation of the vehicle navigation apparatus S according to the present invention are explained with reference to a flowchart of FIG. 2 and display screen examples shown in FIGs. 3 to 5.

Operations shown in the flowcharts of the following embodiment are mainly executed by the CPU 7, the input device 11 and the display unit 13, and are executed as one portion of a main navigation program for executing a basic navigation operation of controlling the vehicle navigation apparatus S as a whole and performing the above mentioned basic map display. Thus, the operations in the following embodiment are executed when a command operation of executing the iconic picture display operation is given through the input device 11 or by the CPU 7 during executing the main navigation program.

A program corresponding to the flowchart in this embodiment is stored in advance in the DVD-ROM disk DK1, the CD-ROM disk DK2 or the ROM 8, as a map display control program, and is read out directly from the ROM 8, or through the DVD-ROM disk DK1 and the CD-ROM disk DK2, as the occasion demands.

In FIG. 2, it is assumed that the map information covering a desirable range which may include or may not include a present position specified through the input device 11 by a user is displayed on the display 17 the vehicle navigation apparatus S as an initial state. If a displayed map is not especially specified, for example, the map is automatically displayed such that a front side becomes larger with respect to the present position of the self-vehicle (i.e., a so-called "front wide" map display), or the map information is automatically displayed such that a present position mark of the self-vehicle is situated at a substantial center of the screen of the display 17. Then, in such a basic map display state, iconic pictures 50, which are marks having special shapes predetermined for respective kinds of specific facilities, are indicated at positions corresponding to the specific facilities, such as restaurants, gasoline stations, service areas, drive-ins and the like, on the map, as shown in a display screen example 17a of the display 17 in FIG. 3. Such an iconic picture display may be performed for all the kinds of facilities. Or, only iconic pictures corresponding to a desirable kind of the facility or desirable kinds of the facilities (for example, only iconic pictures of restaurants, or only iconic pictures of restaurants and service areas) are selectively superimposed and displayed on the map, by an instruction through the input device 11 by the user. Incidentally, a present position mark 60 is also indicated in the display screen example 17a in FIG. 3.

In the above mentioned sate, when a command of performing a display operation of the detail information with regard to the iconic picture is inputted through the input device 11 by the user, a sub-routine for the iconic picture display operation is called from the main navigation program for performing the map display, and the iconic picture display operation process is started as shown in FIG. 2.

That is, in FIG. 2, at first, the coordinate information of the iconic pictures, which are located within a predetermined distance from a center of the screen, for covering a range wider than a display range of the map information displayed on the screen of the display 17 is listed up in an order starting from the iconic picture located closer to the center of the screen, and thereby an iconic picture coordinate list is prepared (Step S1). The number of the iconic pictures targeted by this list may be determined on the basis of the processing capability of the CPU 5 and the like, and may be, for example, at least one to five more than the total number of the iconic pictures to be displayed within the screen.

Next, a coordinate of an iconic picture 50a to be nextly indicated by a finger mark 80 as an example of a cursor such as the display screen example 17b shown in FIG. 4 is determined from the iconic picture coordinate list prepared at the step S1 (Step S2).

Consecutively, it is judged whether or not the iconic picture 50 to be indicated by the finger mark 80 is displayed within the screen of the display 17, from the iconic picture coordinate determined at the step S2 (Step S3).

If it is judged that the iconic picture 50 is displayed within the screen (Step S3 ; YES), the finger mark 80 is displayed at a position of indicating this iconic picture 50, together with the map information and the iconic picture 50 (Step S4). As a result, a screen such as the display screen example 17b shown in FIG. 4 is displayed on the display 17.

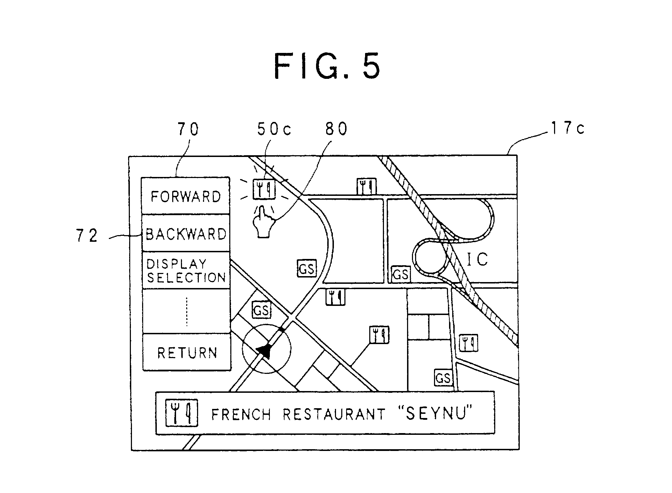

On the other hand, if it is judged at the step S3 that the iconic picture 50 to be indicated by the finger mark 80 is not displayed within the screen (Step S3 ; NO), a contraction scale of the map information is reduced such that the iconic picture 50 to be indicated by the finger mark 80 is displayed within the screen of the display 17, on the basis of the coordinate of the center on the screen (arbitrary position) and the coordinate of the iconic picture 50 determined at the step S2. That is, the scale of the map to be displayed is changed (Step S5). This scale change enables an territory covered by the displayed map to spread to a wide range until including this iconic picture 50, and accordingly the map is displayed together with this iconic picture 50, and simultaneously the finger mark 80 is displayed at the position of indicating this iconic picture 50 (Step S4). As a result, the map information with the small contraction scale, including an iconic picture 50c to be specified by the finger mark 80, which is not displayed in the cases of the display screen examples 17a and 17b respectively shown in FIGs. 3 and 4, such as a display screen example 17c shown in FIG. 5 is displayed on the display 17.

The process of reducing the contraction scale at the step S5 as mentioned above may be performed by using a digital zoom with respect to the map information having the same contraction scale, or may be performed by newly reading out the map information having the contraction scale suitable for the pertinent display from the DVD-ROM disk DK1 or the CD-ROM disk DK2, in which a plurality of map information having the contraction scales (i.e., the scales) different from each other are stored in advance, to thereby use it for the display.

When indicating the iconic picture 50 by the finger mark 80, a menu 70 for the iconic picture display operation as shown in the display screen example 17b or 17c in FIG. 4 or 5 is displayed on the display screen of the display 17, as one portion of the displayed map.

In the menu 70, a "FORWARD" command 71 in the menu 70 is defined as a command to indicate (index) by the finger mark 80 the iconic pictures 50 one by one in the order starting from that located closer to the center of the screen to that located farther from the center, within the display range of the map information displayed on the screen of the display 17, and it is assumed that the user knows the implication of the command and the manner of operating the input of the predetermined kind to execute the command. Moreover, a "BACKWARD" command 72 is defined as a command to indicate (index) by the finger mark 80 the iconic pictures 50 one by one, in the order reverse to the above mentioned "FORWARD" order, namely, in order starting from that located farther from the center of the screen to that located closer to the center, on the display 17 for the map information. Furthermore, a "DISPLAY SELECTION" command 73 is defined as a command to further superimpose the detail related information in relation to the specific facility corresponding to the iconic picture 50 indicated by the finger mark 80 on the map display or to replace the map information by the detailed related information. In this way, the various operation commands with regard to the iconic picture 50 can be contained by the menu 70. Finally, a "RETURN" command 74 is defined as a command to exit the iconic picture display operation routine and to return to the main navigation program. Therefore, the user can select (command-input) the desirable operation command from the menu 70 by the key operation.

Incidentally, the selection (the command input), such as the "FORWARD" command 71, the "BACKWARD" command 72 and the like in the menu 70 may be executed by the input device 11, desirably, by the predetermined kind of the input operation which is one time key operation.

In the iconic picture display operation process, it is judged whether or not the key operation of selecting the kind of the operation command in the menu 70 having the various operation commands as mentioned above is executed by the user (Step S6).

If the key operation of selecting the "DISPLAY SELECTION" command 73 is performed (Step S6 : "Information Display (DISPLAY SELECTION)"), the information display process of the related information with regard to the iconic picture 50 currently indicated by the finger mark 80 is executed (Step S7). This process enables the related information, such as a menu, an operation information, an outside view, an inside view, a telephone number of a restaurant and the like, to be displayed at an edge area or an entire area of the display 17, in a predetermined format.

On the other hand, if the key operation of selecting the "FORWARD" or "BACKWARD" command 71 or 72 is performed (Step S6 : "Forward, Backward"), the operational flow returns to the step S2. Then, the above mentioned operations at the steps S2 to S6 are repeatedly executed for an iconic picture, which is one iconic picture before (namely, next farther from the center of the screen) the iconic picture currently indicated by the finger mark 80, or for an iconic picture, which is one iconic picture after (namely, next closer to the center of the screen) the iconic picture currently indicated by the finger mark 80.

Thus, when the "FORWARD" command 71 is selected and then the operational flow returns to the process at the step S2, for example, if the iconic picture 50a is currently indicated by the finger mark 80, an iconic picture 50b which is the secondly closest to the center of the screen (next to the iconic picture 50a) is nextly indicated by the finger mark 80, in FIG. 4. Then, when an iconic picture 50 located closer to the outermost side among the iconic pictures 50 included in the displayed map is currently indicated by the finger mark 80, if the "FORWARD" command 71 is selected and then the operational flow returns to the process at the step S2, a map with a small contraction scale including at least next iconic picture 50, e.g., the next iconic picture 50c as shown in FIG. 5, is automatically displayed.

Incidentally, when a routine for the iconic picture display operation is actuated, the finger mark 80 may be displayed together with the menu 70 so as to indicate the iconic picture 50 located the closest to the center of the screen. Alternatively, when a subroutine for the iconic picture display operation is actuated, the menu 70 may be displayed without displaying the finger mark 80, and then when the "FORWARD" command 71 is firstly selected, the iconic picture 50 located the closest to the center of the screen may be indicated by the finger mark 80.

As shown in FIG. 4, the name information which is one portion of the related information is displayed on a name display bar 90, as for the iconic picture 50 indicated by the finger mark 80. Moreover, the iconic picture 50 indicated by the finger mark 80 is desirable to be displayed by a so-called "highlight" display, by adjusting the color and/or the brightness of the iconic picture 50, in order to note that the iconic picture 50 is appropriately indicated by the finger mark 80 and for other purposes.

Finally, if the key operation of selecting the "RETURN" command 74 in the menu 70 is performed in FIG. 2 (Step S6 : "Return"), the iconic picture display operation process is ended, and the operational flow returns to the main navigation program for displaying the present position and the map information. Then, the display 17 returns to the state of performing the normal map display as shown in the display screen example 17a in FIG. 3.

If the "FORWARD" key operation is further performed after the processes at the steps S2 to S6 are repeated until displaying the iconic picture located the farthest from the center of the screen among the plurality of iconic pictures listed up at the step S1, the target range of the list may be spread wider to thereby prepare the iconic picture coordinate list. Alternatively, a display of a message to inform that there is no proper facility and the like may be carried out.

As explained above in detail, according to the first embodiment, a plurality of iconic pictures 50 displayed on the map with a certain contraction scale (scale) can be indicated by the finger mark 80, one by one, in the order starting from any position, such as the center of the screen and the like toward the outer side of the screen. Especially, the desirable iconic pictures 50 can be indicated one by one, by the finger mark 80 by one or a plurality of simple key operations, without the inconvenience of positioning the cross-shaped cursor to the iconic picture on the screen by using the joystick and the like such as the conventional art. Moreover, the map with a smaller contraction scale including at least next iconic picture 50 can be automatically displayed, if the key operation input of instructing the next iconic picture 50 is further performed after the iconic picture 50 closer to the outermost side among the iconic pictures 50 included in the displayed map is already indicated by the finger mark 80. Hence, this is very convenient. Furthermore, whether or not such an iconic picture 50 is situated within the screen can be simply and quickly judged by checking the pre-prepared iconic picture coordinate list and then using the CPU 7. Therefore, this is very advantageous.

### (2) Second Embodiment

A second embodiment is provided with a function of returning to a contraction scale which is much suitable for a distance between the center of the screen and the position of the iconic picture 50 indicated by the finger mark 80, when performing the key operation of selecting the "BACKWARD" command 72 of returning the finger mark 80 again to the previous iconic picture 50 (refer to FIGs. 4 and 5), once the contraction scale is reduced in the process of the first embodiment.

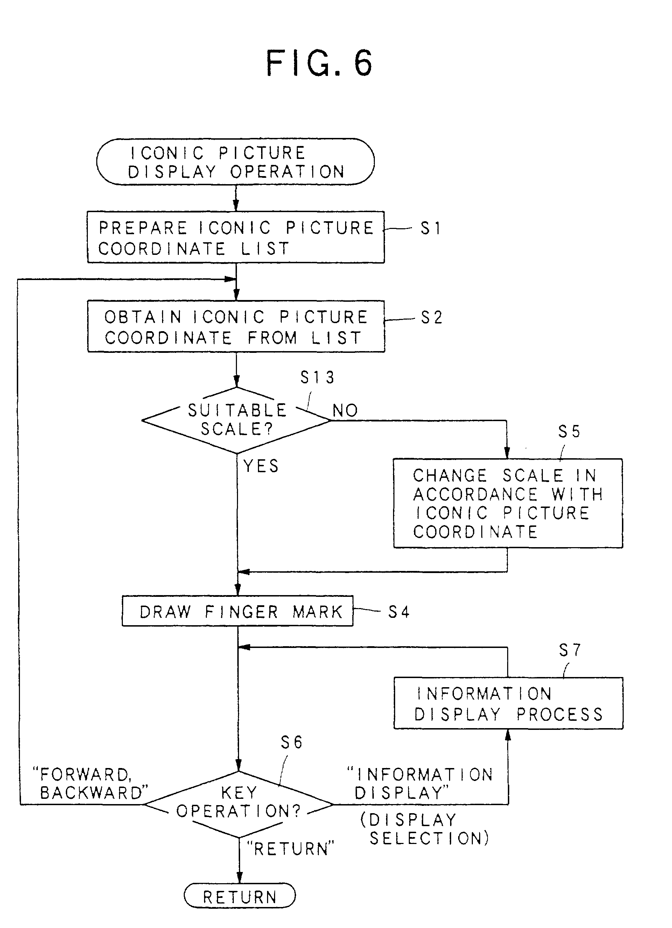

Operations according to an iconic picture display operation in the second embodiment having the above mentioned configuration are explained with reference to a flowchart in FIG. 6. Incidentally, in the flowchart in FIG. 6, the same steps as those in FIG. 2 carry the same step numbers, and the explanations thereof are omitted.

In the second embodiment, a process at a step S13 is performed instead of that at the step S3 in the first embodiment. However, the processes at the other steps are similarly performed.

In FIG. 6, it is judged at the step S13 whether or not an iconic picture 50 to be nextly indicated by the finger mark 80 is situated within the display range of the map information on the screen of the display 17. Furthermore, it is judged at the step S13 whether or not this iconic picture 50 is situated within, for example, a partial range closer to the center than a predetermined distance from the center of the screen included in the display range.

That is, it is judged at the step S13 whether or not the map display is performed at a contraction scale, which is much suitable for a positional relation between a center coordinate of the screen and an iconic picture (that is, a next iconic picture or a previous iconic picture) coordinate to be next indicated by the finger mark 80, based on a predetermined standard (Step S13). Then, if it is judged by this judgment at the step S13 that the map display is not performed at the suitable scale (that is, if it is judged that, because of an extremely large contraction scale, the iconic picture to be indicated is not situated within the screen, or if it is judged that, because of an extremely small contraction scale, the iconic picture to be indicated is situated too close to the center within the partial range located near the center) (Step S13 ; NO), the scale of the currently displayed map is changed so as to have a suitable contraction scale (that is, the contraction scale is decreased so that the iconic picture to be indicated is included in the screen, or the contraction scale is increased so that the partial range coincides with the display range). After that, the map is displayed together with the next iconic picture or the previous iconic picture. Then, so as to indicate the next iconic picture or the previous iconic picture, the finger mark 80 is displayed on the display 17 together with the map and the corresponding iconic picture.

As mentioned above, according to the second embodiment, when the screen display, for example, such as the display screen example 17c in FIG. 5 is being performed, if the key operation of selecting the "BACKWARD" command 72 is carried out, it is judged at the step S13 that the map is not displayed at the suitable scale (Step S13 ; NO). Then, the scale changing process at the step S5 is performed. This results in the display of the map having a scale that is easy to see a route up to the iconic picture 50a indicated by the finger mark 80, such as the display screen example 17b in FIG. 4 and the like.

As detailed above, according to the second embodiment, in addition to the advantageous effect of the first embodiment, the map is automatically displayed which has the contraction scale suitable for the display of at least next iconic picture or previous iconic picture, after indicating one of the iconic pictures included in the displayed map by the finger mark and when performing the key operation input of indicating a further next iconic picture or previous iconic picture by the finger mark. Thus, this is very convenient. Furthermore, whether or not such an iconic picture is situated within the screen or within the predetermined partial range can be simply and quickly judged by checking the pre-prepared iconic picture coordinate list and then using the CPU 7. Therefore, this is very advantageous.

### (3) Third Embodiment

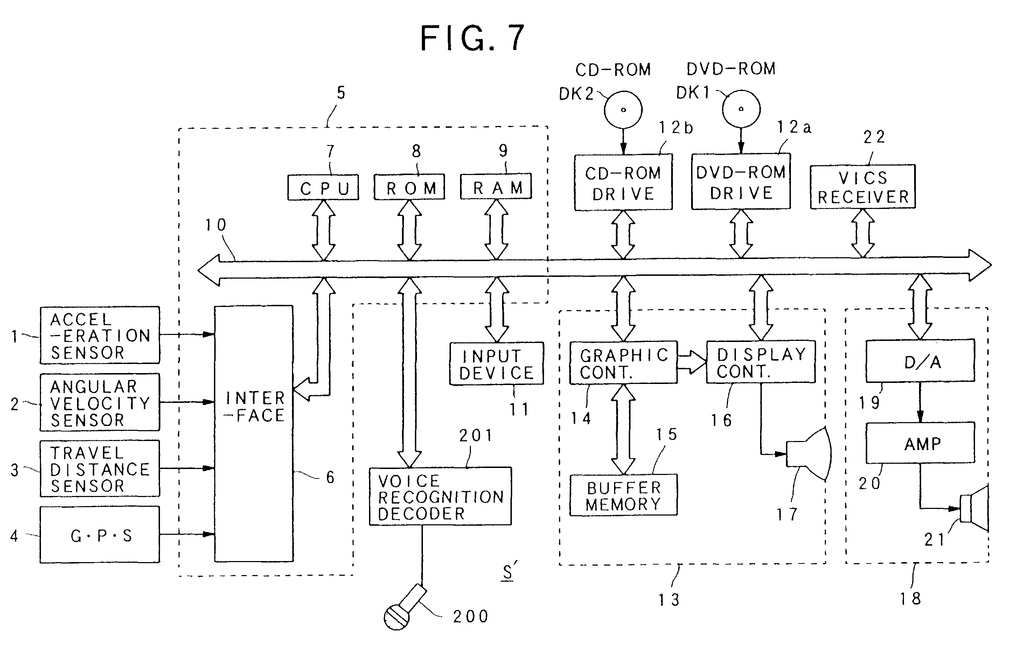

Next, a configuration of a vehicle navigation apparatus as a third embodiment according to the present invention is explained with reference to FIG. 7. Incidentally, in FIG. 7, the same constitutional elements as those in FIG. 1 carry the same reference numerals, and the explanations thereof are omitted.

As shown in FIG. 7, a vehicle navigation apparatus S' is provided with an external microphone 200 and a voice recognition decoder 201 for recognizing a word represented by a voice inputted from the external microphone 200, in addition to the acceleration sensor 1, the velocity sensor 2, the travel distance sensor 3, the GPS receiver 4, the system controller 5, the input device 11, the DVD-ROM drive 12a, the CD-ROM drive 12b, the display unit 13, the acoustically reproducing unit 18 and the VICS receiver 22, which are the same elements as the first embodiment.

The system controller 5 and the voice recognition decoder 201 are connected to each other through the bus line 10.

The external microphone 200 is installed within the movable body, and constructed so as to pick up a human voice of a user to thereby transmit as a voice signal to the voice recognition decoder 201.

The voice recognition decoder 201 is constructed so as to recognize the voice signal sent by the external microphone 200 as a single word or a plurality of candidate words similar to the single word by using a voice recognition technique to thereby output the word data indicative of the recognized word or candidate words through the bus line 10 to the CPU 7. More concretely, the voice recognition decoder 201 can be constructed by using either of a known voice recognition circuit for recognizing a voice of a specified talker or a known voice recognition circuit for recognizing a voice of an unspecified talker. The circuit for the unspecified talker is widely used as an IC (Integrated Circuit) for checking a built-in dictionary (for example, a Japanese dictionary), to which a voice signal is inputted as an input signal, to thereby output a word similar to a word represented by the inputted voice, on the basis of a similarity in a spectral pattern of a voice frequency for each vowel and/or consonant and each words, and the like.

Especially, the voice recognition circuit for the specified talker is advantageous since the voice can be very accurately recognized with the spectral pattern of the voice frequency of the specified talker or the like as a standard.

On the other hand, the voice recognition circuit for the unspecified talker has a merit that the unspecified person can use it. Especially, the voice recognition circuit for the unspecified talker is constructed so as to check the built-in dictionary for, for example, a voice input of a word "XXX" pronounced by a user to thereby output five candidate words similar to this pronunciation, in a form of candidate word data each having the point of quantitatively representing the similarity of the respective candidate words to the pronunciation of the inputted word "XXX". Hence, when using this voice recognition circuit, it may be constructed so as to judge by the system controller 5 that, for example, the candidate word having the highest point among the five candidates outputted by the voice recognition decoder 201 is voice-inputted, and then perform the iconic picture display operation and the like, on the basis of the judgment result.

As mentioned above, in this embodiment, one example of the voice input device is constituted by the external microphone 200 and the voice recognition decoder 201.

According to the third embodiment, the iconic picture display operation is performed by the voice operation input through the external microphone 200, in stead of or in addition to the key operation input using the input device 11 in the first or second embodiment.

More actually, for example, when voice-inputting "FORWARD" instead of the key operation input in the condition of the display such as the display screen example 17b or 17c in FIG. 4 or 5, the voice "FORWARD" is recognized by the voice recognition decoder 201, which has received this voice through the external microphone 200. Then, the voice input signal is sent from the voice recognition decoder 201 to the CPU 7, and thereby the display of the display 17 is changed by the display control based on the voice input signal.

Alternatively, for example, when voice-inputting "BACKWARD" instead of the key operation input in the condition of the display shown in the display screen example 17c of FIG. 5, the voice "BACKWARD" is recognized by the voice recognition decoder 201, which has received this voice through the external microphone 200. Then, the voice input signal is sent from the voice recognition decoder 201 to the CPU 7, and thereby the display of the display 17 is changed by the display control based on the voice input signal.

In the case of the voice recognition decoder 201, which checks the built-in dictionary to thereby output the candidate words, such as the voice recognition circuit for the unspecified talker, if limiting the check range of the built-in dictionary to only the items (words) which can be possibly selected from the menu 70 in the condition that the menu 70 (refer to FIGs. 4 and 5) is displayed, the possibility of an erroneous recognition is rare as long as the user pronounces any of these items (words). For example, it is easy for the voice recognition decoder 201 to differentiate the pronunciation of "Forward" from that of "Backward", or even easier to differentiate the pronunciation of "Forward" from that of "Return" or "SELECT". Hence, this is advantageous since the voice can be substantially perfectly recognized.

Incidentally, the voice can be recognized even when such a menu for the iconic picture operation is not displayed. For example, a voice input such as "iconic picture operation" which is set in advance may be used in order to display the menu for the iconic picture operation. Moreover, it may be constructed so as to voice-input various information, such as a position decision information to decide a place to call a periphery map in which the present position is not included, a destination place, a start place and the like, a control command decision information for deciding various control commands and the like.

As explained above, according to the third embodiment, when the user intends to move the finger mark to a next iconic picture, it is not necessary for the user to position the cross-shaped cursor on the screen by using the joystick, but it is enough for the user to just pronounce a voice without carrying out any key operation. Thus, this is very convenient.

In the above explained respective embodiments, the related information in addition to or instead of the map information is visually informed in the predetermined format, as the method for providing the related information in detail with regard to the iconic picture indicated by the finger mark. However, the above mentioned related information may be audibly informed by the synthesized voice through a speaker by using a voice synthesis technique. Even this configuration can similarly provide the advantageous effect of this embodiment, such as the easy display operation of the iconic picture.

The information to display the iconic pictures 50 in the respective embodiments may be written in the map information in advance as one portion of the image data constituting the map information. In this case, for example, the configuration describe below may be considered. That is, the information indicative of the position and the kind of the iconic picture correlated with the coordinate on the map information is stored in the DVD-ROM disk DK1 or the CD-ROM disk DK2 as the information for the iconic picture operation. When the key operation to the iconic picture is performed, this information is read out from the disk, directly or once it is stored in the RAM 9. Then, it is judged on the basis of this read out information whether or not each iconic picture on the map is indicated by the finger mark 80.

Moreover, the respective embodiments may be applied to not only the display operation of the iconic pictures in the two-dimensional map display, but also the display operation of the iconic pictures in the three-dimensional map display such as a so-called "bird view" (bird's-eye view).

Furthermore, the navigation apparatuses in the respective embodiments are convenient as the navigation apparatus not only for a car, but also for an auto-bike, a tricycle, an airplane, a ship and the like.

## Claims

1. A map display controlling method of controlling a display of map information by a display device (13) in a navigation apparatus (S) for displaying the map information together with a plurality of mark informations (50), each of which is located at a specific point indicated by the map information and indicates an existence of related information in relation to the specific point respectively, **characterized in that** said map display controlling method comprises: a process in which the user sets a desired position;
a judging process of judging whether or not the mark information is located within a display range of the map information displayed by said display device each time a command, which instructs said display device to indicate the mark information on the map information by a cursor (80) one by one in an order starting from the mark information located closer to the desired position to that located farther from the desired position within the display range, is inputted; and
a cursor display controlling process of controlling said display device to display the cursor together with the map information and the mark information such that the cursor indicates the mark information on the map information, if it is judged by said judging process that the mark information is located within the display range, and to display the cursor together with the map information and the mark information such that the cursor indicates the mark information on the map information by reducing a contraction scale of the map information to be displayed so as to display the mark information within the display range, if it is judged by said judging process that the mark information is not located within the display range.

2. A map display controlling method according to Claim 1, **characterized in that**
said method further comprises a list preparing process of listing up coordinate information of the mark information (50) located within a predetermined range with respect to the desired position as a standard, in an order starting from the mark information located closer to the desired position,
in said judging process, it is judged whether or not the mark information is located within the display range, on the basis of the listed up coordinate information, and
in said cursor display controlling process, the contraction scale is reduced so that the mark information can be displayed, on the basis of the listed up coordinate information, if it is judged by said judging process that the mark information is not located within the display range.

3. A map display controlling method according to Claim 1 or 2, **characterized in that**
in said judging process, it is further judged whether or not the mark information (50) is located within a partial range having a predetermined size included in the display range, when judging whether or not the mark information is located within the display range, and
in said cursor display controlling process, the contraction scale is increased so that the partial range be coincident with the display range, and to display the cursor (80) together with the map information and the mark information such that the cursor indicates the mark information on the map information, if it is judged by said judging process that the mark information is located within the partial range.

4. A map display controlling method according to any one of Claims 1 to 3, **characterized in that** the command is inputted once each time a predetermined kind of a key input operation is performed once by a key inputting device (11) of said navigation apparatus (S).

5. A map display controlling method according to any one of Claims 1 to 3, **characterized in that** the command is inputted once each time a predetermined kind of a voice input operation is performed once by a voice inputting device (200, 201) of said navigation apparatus (S').

6. A map display controlling method according to any one of Claims 1 to 5, **characterized in that** the desired position is set to a center of the display range.

7. A map display controlling method according to any one of Claims 1 to 5, **characterized in that**
said method further comprises a process of controlling said display device (13) to display a present position mark (60) representing a present position of a movable body to which said navigation apparatus (S) is installed, and
the desired position is set to a position of the present position mark.

8. A map display controlling apparatus (5) for controlling a display of map information by a display device (13) in a navigation apparatus (S) for displaying the map information together with a plurality of mark informations (50), each of which is located at a specific point indicated by the map information and indicates an existence of related information in relation to the specific point respectively, **characterized in that** said map display controlling apparatus comprises: a device for allowing the user to set a desired position;
a judging device (5) for judging whether or not the mark information is located within a display range of the map information displayed by said display device each time a command, which instructs said display device to indicate the mark information on the map information by a cursor (80) one by one in an order starting from the mark information located closer to the desired position to that located farther from the desired position within the display range, is inputted; and
a cursor display controlling device (5) for controlling said display device to display the cursor together with the map information and the mark information such that the cursor indicates the mark information on the map information, if it is judged by said judging device that the mark information is located within the display range, and to display the cursor together with the map information and the mark information such that the cursor indicates the mark information on the map information by reducing a contraction scale of the map information to be displayed so as to display the mark information within the display range, if it is judged by said judging device that the mark information is not located within the display range.

9. A map display controlling apparatus (5) according to Claim 8, **characterized in that**
said apparatus further comprises a list preparing device (5) for listing up coordinate information of the mark information (50) located within a predetermined range with respect to the desired position as a standard, in an order starting from the mark information located closer to the desired position,
said judging device (5) judges whether or not the mark information is located within the display range, on the basis of the listed up coordinate information, and
said cursor display controlling device (5) reduces the contraction scale so that the mark information can be displayed, on the basis of the listed up coordinate information, if it is judged by said judging device that the mark information is not located within the display range.

10. A map display controlling apparatus (5) according to Claim 8 or 9, **characterized in that**
said judging device (5) further judges whether or not the mark information (50) is located within a partial range having a predetermined size included in the display range, when judging whether or not the mark information is located within the display range, and
said cursor display controlling device (5) increases the contraction scale so that the partial range be coincident with the display range, and to display the cursor (80) together with the map information and the mark information such that the cursor indicates the mark information on the map information, if it is judged by said judging device that the mark information is located within the partial range.

11. A map display controlling apparatus (5) according to any one of Claims 8 to 10, **characterized in that** said apparatus further comprises a key inputting device (11), and the command is inputted once each time a predetermined kind of a key input operation is performed once by said key inputting device.

12. A map display controlling apparatus (5) according to any one of Claims 8 to 11, **characterized in that** said apparatus further comprises a voice inputting device (200, 201), and the command is inputted once each time a predetermined kind of a voice input operation is performed once by said voice inputting device.

13. A map display controlling apparatus (5) according to any one of Claims 8 to 12, **characterized in that** the desired position is set to a center of the display range.

14. A map display controlling apparatus (5) according to any one of Claims 8 to 12, **characterized in that**
said apparatus further comprises a device (5) for controlling said display device (13) to display a present position mark (60) representing a present position of a movable body to which said navigation apparatus (S) is installed, and
the desired position is set to a position of the present position mark.

## Patentansprüche

1. Kartenanzeige-Steuerverfahren zum Steuern einer Anzeige von Karteninformationen durch eine Anzeigevorrichtung (13) in einem Navigationsgerät (S) zum Anzeigen der Karteninformationen zusammen mit mehreren Markierungsinformationen (50), die alle an einem durch die Karteninformationen angegebenen speziellen Punkt positioniert sind und jeweils eine Existenz von zugehörigen Informationen in Verbindung mit dem speziellen Punkt anzeigen,
**dadurch gekennzeichnet,**
**dass** das Kartenanzeige-Steuerverfahren aufweist:
einen Prozess, bei dem der Benutzer eine gewünschte Position einstellt;
einen Beurteilungsprozess zum Beurteilen, ob die Markierungsinformationen in einem Anzeigebereich der durch die Anzeigevorrichtung angezeigten Karteninformationen positioniert sind oder nicht, jedes Mal, wenn ein Befehl eingegeben wird, der der Anzeigevorrichtung befiehlt, die Markierungsinformationen auf den Karteninformationen durch einen Cursor (80) einzeln in einer Reihenfolge beginnend von der näher zu der gewünschten Position positionierten Markierungsinformation bis zu der weiter von der gewünschten Position entfernt positionierten in dem Anzeigebereich anzuzeigen; und
einen Cursoranzeige-Steuerprozess zum Steuern der Anzeigevorrichtung, um den Cursor zusammen mit den Karteninformationen und den Markierungsinformationen so anzuzeigen, dass der Cursor die Markierungsinformation auf den Karteninformationen anzeigt, wenn durch den Beurteilungsprozess beurteilt wird, dass die Markierungsinformationen in dem Anzeigebereich positioniert sind, und um den Cursor zusammen mit den Karteninformationen und den Markierungsinformationen so anzuzeigen, dass der Cursor die Markierungsinformationen auf den Karteninformationen durch Verkleinern eines Verkleinerungsmaßstabes der anzuzeigenden Karteninformationen anzeigt, um so die Markierungsinformationen in dem Anzeigebereich anzuzeigen, falls durch den Beurteilungsprozess beurteilt wird, dass die Markierungsinformationen nicht in dem Anzeigebereich positioniert sind.

2. Kartenanzeige-Steuerverfahren nach Anspruch 1,
**dadurch gekennzeichnet,**
**dass** das Verfahren ferner einen Listenvorbereitungsprozess zum Auflisten von Koordinateninformationen der in einem vorbestimmten Bereich bezüglich der gewünschten Position angeordnete Markierungsinformationen (50) als einen Standard in einer Reihenfolge beginnend von den näher zu der gewünschten Position positionierten Markierungsinformationen aufweist,
**dass** in dem Beurteilungsprozess auf der Basis der aufgelisteten Koordinateninformationen beurteilt wird, ob die Markierungsinformationen in dem Anzeigebereich positioniert sind oder nicht, und
**dass** in dem Cursoranzeige-Steuerprozess der Verkleinerungsmaßstab auf der Basis der aufgelisteten Koordinateninformationen so reduziert wird, dass die Markierungsinformationen angezeigt werden können, falls durch den Beurteilungsprozess beurteilt wird, dass die Markierungsinformationen nicht in dem Anzeigebereich positioniert sind.

3. Kartenanzeige-Steuerverfahren nach Anspruch 1 oder 2,
**dadurch gekennzeichnet,**
**dass** in dem Beurteilungsprozess ferner beurteilt wird, ob die Markierungsinformationen (50) in einem Teilbereich mit einer vorbestimmten Größe innerhalb des Anzeigebereichs positioniert sind oder nicht, wenn beurteilt wird, ob die Markierungsinformationen in dem Anzeigebereich positioniert sind oder nicht, und
**dass** in dem Cursoranzeige-Steuerprozess der Verkleinerungsmaßstab vergrößert wird, so dass der Teilbereich mit dem Anzeigenbereich zusammenfällt und der Cursor (80) zusammen mit den Karteninformationen und den Markierungsinformationen so angezeigt wird, dass der Cursor die Markierungsinformationen auf den Karteninformationen anzeigt, falls durch den Beurteilungsprozess beurteilt wird, dass die Markierungsinformationen in dem Teilbereich positioniert sind.

4. Kartenanzeige-Steuerverfahren nach einem der Ansprüche 1 bis 3,
**dadurch gekennzeichnet,**
**dass** der Befehl jedes Mal eingegeben wird, wenn eine vorbestimmte Art eines Tasteneingabevorgangs einmal durch eine Tasteneingabevorrichtung (11) des Navigationsgeräts (S) durchgeführt wird.

5. Kartenanzeige-Steuerverfahren nach einem der Ansprüche 1 bis 3,
**dadurch gekennzeichnet,**
**dass** der Befehl jedes Mal eingegeben wird, wenn eine vorbestimmte Art eines Spracheingabevorgangs einmal durch eine Spracheingabevorrichtung (200, 201) des Navigationsgeräts (S') durchgeführt wird.

6. Kartenanzeige-Steuerverfahren nach einem der Ansprüche 1 bis 5,
**dadurch gekennzeichnet,**
**dass** die gewünschte Position in eine Mitte des Anzeigebereichs gesetzt wird.

7. Kartenanzeige-Steuerverfahren nach einem der Ansprüche 1 bis 5,
**dadurch gekennzeichnet,**
**dass** das Verfahren ferner einen Prozess zum Steuern der Anzeigevorrichtung (13) aufweist, um eine aktuelle Positionsmarkierung (60) anzuzeigen, die eine aktuelle Position eines bewegbaren Körpers darstellt, an welchem das Navigationsgerät (S) installiert ist, und
**dass** die gewünschte Position auf eine Position der aktuellen Positionsmarkierung gesetzt wird.

8. Kartenanzeige-Steuervorrichtung (5) zum Steuern einer Anzeige von Karteninformationen durch eine Anzeigevorrichtung (13) in einem Navigationsgerät (S) zum Anzeigen der Karteninformationen zusammen mit mehreren Markierungsinformationen (50), die alle an einem durch die Karteninformationen angezeigten speziellen Punkt positioniert sind und jeweils eine Existenz von zugehörigen Informationen in Verbindung mit dem speziellen Punkt anzeigen,
**dadurch gekennzeichnet,**
**dass** die Kartenanzeige-Steuervorrichtung aufweist:
eine Vorrichtung, um den Benutzer eine gewünschte Position einstellen zu lassen; eine Beurteilungsvorrichtung (5) zum Beurteilen, ob die Markierungsinformationen in einem durch die Anzeigevorrichtung angezeigten Anzeigebereich der Karteninformationen positioniert sind, jedes Mai, wenn ein Befehl eingegeben wird, der der Anzeigevorrichtung befiehlt, die Markierungsinformationen auf den Karteninformationen durch einen Cursor (80) einzeln in einer Reihenfolge beginnend von den näher zu der gewünschten Position positionierten Markierungsinformationen bis zu den weiter von der gewünschten Position entfernt positionierten in dem Anzeigebereich anzuzeigen; und
eine Cursoranzeige-Steuervorrichtung (5) zum Steuern der Anzeigevorrichtung, um den Cursor zusammen mit den Karteninformationen und den Markierungsinformationen so anzuzeigen, dass der Cursor die Markierungsinformation auf den Karteninformationen anzeigt, falls durch die Beurteilungsvorrichtung beurteilt wird, dass die Markierungsinformationen in dem Anzeigebereich positioniert sind, und um den Cursor zusammen mit den Karteninformationen und den Markierungsinformationen so anzuzeigen, dass der Cursor die Markierungsinformationen auf den Karteninformationen durch Reduzieren eines Verkleinerungsmaßstabes der anzuzeigenden Karteninformationen anzeigt, um so die Markierungsinformationen in dem Anzeigebereich anzuzeigen, falls durch die Beurteilungsvorrichtung beurteilt wird, dass die Markierungsinformationen nicht in dem Anzeigebereich positioniert sind.

9. Kartenanzeige-Steuervorrichtung (5) nach Anspruch 8,
**dadurch gekennzeichnet,**
**dass** die Vorrichtung ferner eine Listenvorbereitungsvorrichtung (5) zum Auflisten von Koordinateninformationen der in einem vorbestimmten Bereich bezüglich der gewünschten Position positionierten Markierungsinformationen (50) als Standard in einer Reihenfolge beginnend von den näher zu der gewünschten Position positionierten Markierungsinformationen aufweist,
**dass** die Beurteilungsvorrichtung (5) basierend auf den aufgelisteten Koordinateninformationen beurteilt, ob die Markierungsinformationen in dem Anzeigebereich positioniert sind oder nicht, und
**dass** die Cursoranzeige-Steuervorrichtung (5) auf der Basis der aufgelisteten Koordinateninformationen den Verkleinerungsmaßstab so reduziert, dass die Markierungsinformationen angezeigt werden können, falls durch die Beurteilungsvorrichtung beurteilt wird, dass die Markierungsinformationen nicht in dem Anzeigebereich positioniert sind.

10. Kartenanzeige-Steuervorrichtung (5) nach Anspruch 8 oder 9,
**dadurch gekennzeichnet,**
**dass** die Beurteilungsvorrichtung (5) beurteilt, ob die Markierungsinformationen (50) in einem Teilbereich mit einer vorbestimmten Größe innerhalb des Anzeigebereichs positioniert sind, wenn beurteilt wird, ob die Markierungsinformationen in dem Anzeigebereich positioniert sind oder nicht, und
**dass** die Cursoranzeige-Steuervorrichtung (5) den Verkleinerungsmaßstab vergrößert, sodass der Teilbereich mit dem Anzeigebereich zusammenfällt, und den Cursor (80) zusammen mit den Karteninformationen und den Markierungsinformationen so anzeigt, dass der Cursor die Markierungsinformationen auf den Karteninformationen anzeigt, falls durch die Beurteilungsvorrichtung beurteilt wird, dass die Markierungsinformationen in dem Teilbereich positioniert sind.

11. Kartenanzeige-Steuervorrichtung (5) nach einem der Ansprüche 8 bis 10,
**dadurch gekennzeichnet,**
**dass** die Vorrichtung ferner eine Tasteneingabevorrichtung (11) aufweist und der Befehl jedes Mal eingegeben wird, wenn eine vorbestimmte Art eines Tasteneingabevorgangs einmal durch die Tasteneingabevorrichtung durchgeführt wird.

12. Kartenanzeige-Steuervorrichtung (5) nach einem der Ansprüche 8 bis 11,
**dadurch gekennzeichnet,**
**dass** die Vorrichtung ferner eine Spracheingabevorrichtung (200, 201) aufweist und der Befehl jedes Mal angegeben wird, wenn eine vorbestimmte Art eines Spracheingabevorgangs einmal durch die Spracheingabevorrichtung durchgeführt wird.

13. Kartenanzeige-Steuervorrichtung (5) nach einem der Ansprüche 8 bis 12,
**dadurch gekennzeichnet,**
**dass** die gewünschte Position in eine Mitte des Anzeigebereichs gesetzt wird.

14. Kartenanzeige-Steuervorrichtung (5) nach einem der Ansprüche 8 bis 12,
**dadurch gekennzeichnet,**
**dass** die Vorrichtung ferner eine Vorrichtung (5) zum Steuern der Anzeigevorrichtung (13) aufweist, um eine aktuelle Positionsmarkierung (60) anzuzeigen, die eine aktuelle Position eines bewegbaren Körpers darstellt, an dem das Navigationsgerät (S) installiert ist, und
**dass** die gewünschte Position zu einer Position der aktuellen Positionsmarkierung gesetzt wird.

## Revendications

1. Procédé de commande d'affichage de carte pour commander l'affichage d'informations de carte par un dispositif d'affichage (13) dans un appareil de navigation (S) pour afficher des informations de carte en même temps qu'une pluralité d'informations de marquage (50), dont chacune est située à un point spécifique indiqué par les informations de carte et indique une existence des informations liées par rapport à un point spécifique, respectivement, **caractérisé en ce que** ledit procédé de commande d'affichage de carte comprend :
un processus dans lequel l'utilisateur règle une position voulue ;
un processus de test pour tester si oui ou non les informations de marquage sont situées dans la plage d'affichage des informations de carte affichées par ledit dispositif d'affichage chaque fois qu'une commande, qui donne l'instruction audit dispositif d'affichage d'indiquer les informations de marquage sur les informations de carte par un curseur (80) une par une dans un ordre commençant à partir des informations de marquage situées le plus près de la position voulue jusqu'à celle située le plus loin de la position voulue dans la plage d'affichage, soit introduite ; et
un processus de commande d'affichage de curseur pour commander ledit dispositif d'affichage pour afficher le curseur en même temps que les informations de carte et les informations de marquage pour que le curseur indique les informations de marquage sur les informations de carte, si ledit processus de test teste que les informations de carte sont situées dans la plage d'affichage, et pour afficher le curseur en même temps que les informations de carte et les informations de marquage pour que le curseur indique les informations de marquage sur les informations de carte en réduisant l'échelle de réduction des informations de carte à afficher afin d'afficher les informations de marquage dans la plage d'affichage, si ledit processus de test teste que les informations de marquage ne sont pas situées dans la plage d'affichage.

2. Procédé de commande d'affichage de carte selon la revendication 1, **caractérisé en ce que**
ledit procédé comprend en outre un processus de préparation de liste pour lister des informations de coordonnées des informations de marquage (50) situées dans une plage prédéterminée par rapport à une position voulue comme une norme, dans un ordre commençant à partir des informations de marquage situées le plus près de la position voulue,
dans ledit processus de test, il est testé si oui ou non les informations de marquage sont situées dans la plage d'affichage, sur la base des informations de coordonnées listées, et
dans ledit processus de commande d'affichage de curseur, l'échelle de réduction est réduite pour que les informations de marquage puissent être affichées, sur la base des informations de coordonnées listées, si ledit processus de test teste que les informations de marquage ne sont pas situées dans la plage d'affichage.

3. Procédé de commande d'affichage de marque selon la revendication 1 ou 2, **caractérisé en ce que**
dans ledit processus de test, il est testé en outre si oui ou non les informations de marquage (50) sont situées dans une plage partielle ayant une taille prédéterminée comprise dans la plage d'affichage, lorsqu'il est testé si oui ou non les informations de marquage sont situées dans la plage d'affichage, et
dans ledit processus de commande d'affichage de curseur, l'échelle de réduction est augmentée pour que la plage partielle coïncide avec la plage d'affichage, et pour afficher le curseur (80) en même temps que les informations de carte et les informations de marquage pour que le curseur indique les informations de marquage sur les informations de carte, si ledit processus de test teste que les informations de marquage sont situées dans la plage partielle.

4. Procédé de commande d'affichage de carte selon l'une quelconque des revendications 1 à 3, **caractérisé en ce que** la commande est introduite dès qu'un type prédéterminé d'opération d'entrée de touche est actionné une fois par un dispositif d'entrée de touche (11) dudit appareil de navigation (S).

5. Procédé de commande d'affichage de carte selon l'une quelconque des revendications 1 à 3, **caractérisé en ce que** la commande est appliquée dès qu'un type prédéterminé d'une opération d'entrée vocale est réalisé une fois par un dispositif d'entrée vocale (200, 201) dudit appareil de navigation (S').

6. Procédé de commande d'affichage de carte selon l'une quelconque des revendications 1 à 5, **caractérisé en ce que** la position voulue est placée au centre d'une plage d'affichage.

7. Procédé de commande d'affichage de carte selon l'une quelconque des revendications 1 à 5, **caractérisé en ce que**
ledit procédé comprend en outre un processus de commande dudit dispositif d'affichage (13) pour afficher une marque de position actuelle (60) représentant une position actuelle d'un corps mobile sur lequel ledit appareil de navigation (S) est installé, et
la position voulue est réglée à une position de la présente marque de position.

8. Appareil de commande d'affichage de carte (5) pour commander un affichage des informations de carte par un dispositif d'affichage (13) d'un appareil de navigation (S) pour afficher les informations de carte en même temps qu'une pluralité d'informations de marquage (50), dont chacune est située à un point spécifique indiqué par les informations de carte et indique une existence des informations liées par rapport à un point spécifique respectivement, **caractérisé en ce que** ledit appareil de commande d'affichage comprend :
un dispositif pour permettre à l'utilisateur de régler une position voulue ;
un dispositif de test (5) pour tester si oui ou non les informations de marquage se trouvent dans une plage d'affichage des informations de carte affichées par ledit dispositif d'affichage, chaque fois qu'une commande est appliquée, qui donne l'instruction audit dispositif d'affichage d'indiquer les informations de marquage sur les informations de carte par un curseur (80) une par une dans un ordre commençant à partir des informations de marquage situées plus près de la position voulue que celles situées plus loin de la position voulue dans la plage d'affichage ; et
un dispositif de commande d'affichage de curseur (5) pour commander ledit dispositif d'affichage pour afficher le curseur en même temps que les informations de carte et les informations de marquage pour que le curseur indique les informations de marquage sur les informations de marquage, si ledit dispositif de test teste que les informations de marquage se trouvent dans la plage d'affichage, et pour afficher le curseur en même temps que les informations de carte et les informations de marquage pour que le curseur indique les informations de marquage sur les informations de carte en réduisant une échelle de réduction des informations de carte à afficher afin d'afficher les informations de marquage dans la plage d'affichage, si ledit dispositif de test teste que les informations de marquage ne se trouvent pas dans la plage d'affichage.

9. Appareil de commande d'affichage de carte (5) selon la revendication 8, **caractérisé en ce que**
ledit appareil comprend en outre un dispositif de préparation de liste (5) pour lister des informations de coordonnées des informations de marquage (50) situées dans une plage prédéterminée par rapport à la position voulue comme une norme, dans un ordre commençant à partir des informations de marquage situées plus près de la position voulue,
ledit dispositif de test (5) teste si oui ou non les informations de marquage se trouvent dans la plage d'affichage, sur la base des informations de coordonnées listées, et
ledit dispositif de commande d'affichage de curseur (5) réduit l'échelle de réduction pour que les informations de marquage puissent être affichées, sur la base des informations de coordonnées listées, si ledit dispositif de test teste que les informations de marquage ne se trouvent pas dans la plage d'affichage.

10. Appareil de commande d'affichage de carte (5) selon la revendication 8 ou 9, **caractérisé en ce que**
ledit dispositif de test (5) teste en outre si oui ou non les informations de marquage (50) se trouvent dans une plage partielle ayant une taille prédéterminée comprise dans la plage d'affichage, lorsqu'il est testé si oui ou non les informations de marquage se trouvent dans la plage d'affichage, et
ledit dispositif de commande d'affichage de curseur (5) augmente l'échelle de réduction pour que la plage partielle coïncide avec la plage d'affichage, et pour afficher le curseur (80) en même temps que les informations de carte et les informations de marquage pour que le curseur indique les informations de marquage sur les informations de carte, si ledit dispositif de test teste que les informations de marquage se trouvent dans la plage partielle.

11. Appareil de commande d'affichage de carte (5) selon l'une quelconque des revendications 8 à 10, **caractérisé en ce que** ledit appareil comprend en outre un dispositif d'entrée de clé (11), et la commande est appliquée dès qu'un type prédéterminé d'opération d'entrée de clé est réalisé une fois par ledit dispositif d'entrée de clé.

12. Appareil de commande-d'affichage de carte (5) selon l'une quelconque des revendications 8 à 11, **caractérisé en ce que** ledit appareil comprend en outre un dispositif d'entrée vocale (200, 201), et la commande est appliquée dès qu'un type prédéterminé d'opération d'entrée vocale est réalisé une fois par ledit dispositif d'entrée vocale.

13. Appareil de commande d'affichage de carte (5) selon l'une quelconque des revendications 8 à 12, **caractérisé en ce que** la position voulue est réglée au centre de la plage d'affichage.

14. Appareil de commande d'affichage de carte (5) selon l'une quelconque des revendications 8 à 12, **caractérisé en ce que**
ledit appareil comprend en outre un dispositif (5) pour commander ledit dispositif d'affichage (13) pour afficher une marque de position actuelle (60) représentant une position actuelle d'un corps mobile sur lequel ledit appareil de navigation (S) est installé, et
la position voulue est réglée à une position de la marque de position actuelle.
